Europäisches Patentamt

European Patent Office

Office européen des brevets

(19)

(11) Veröffentlichungsnummer: **0 033 307**
**B1**

(12) **EUROPÄISCHE PATENTSCHRIFT**

(45) Veröffentlichungstag der Patentschrift:
20.06.84

(21) Anmeldenummer: **81890001.1**

(22) Anmeldetag: **07.01.81**

(51) Int. Cl.³: **G 01 K 13/06**

(54) **Verfahren zum kontinuierlichen Messen der Strangoberflächentemperatur eines Gussstranges sowie Einrichtung zur Durchführung des Verfahrens.**

(30) Priorität: **11.01.80 AT 131/80**

(43) Veröffentlichungstag der Anmeldung:
**05.08.81 Patentblatt 81/31**

(45) Bekanntmachung des Hinweises auf die Patenterteilung:
**20.06.84 Patentblatt 84/25**

(84) Benannte Vertragsstaaten:
**BE CH DE FR GB IT LI LU NL SE**

(56) Entgegenhaltungen:
**DE - A - 2 206 721**
**FR - A - 2 242 172**
**FR - A - 2 374 114**

(73) Patentinhaber: **VOEST-ALPINE Aktiengesellschaft, Werksgelände, A-4010 Linz (AT)**

(72) Erfinder: **Kriegner, Othmar, Giselherstrasse 2, A-4300 St. Valentin (AT)**
Erfinder: **Gruber, Günther, Losensteinerstrasse 55, A-4020 Linz (AT)**

(74) Vertreter: **Wolfram, Gustav, Dipl.-Ing., Schwindgasse 7 P.O. Box 205, A-1041 Wien (AT)**

## Beschreibung

Die Erfindung betrifft ein Verfahren zum kontinuierlichen Messen der Strangoberflächentemperatur über die Länge eines kontinuierlich vergossenen Gussstranges, insbesondere eines Stahlbrammengussstranges, innerhalb einer Rollenführung einer Stranggiessanlage, wobei mindestens ein Thermoelement mit seiner Messstelle und mit seinem die Messstelle mit den Ausgleichsleitungen verbindende Thermopaar auf die Strangoberfläche aufgebracht und mit der Strangoberfläche mitbewegt wird.

Die Erfindung betrifft ferner eine Einrichtung zur Durchführung obigen Verfahrens.

Es ist bekannt, für die Messung der Strangoberflächentemperatur Teilstrahlungs- oder Zweifarbenpyrometer in Verbindung mit Visierrohren oder Lichtleitern zu verwenden. Das Pyrometer ist dabei ausserhalb der Kühlkammer der Stranggiessanlage angeordnet und ein Visierrohr reicht vom Pyrometer bis knapp zur Oberfläche des Stranges. Da sich innerhalb der Kühlkammer stets Dampf befindet, ist es zum Zweck des Freihaltens des Rohres erforderlich, vor und während der Messung Luft durch das Visierrohr einzublasen. Diese Luft führt jedoch zu einer Abkühlung der Strangoberfläche an der Messstelle, was eine Verfälschung des Messergebnisses zur Folge hat. Bei Bogenstranggiessanlagen sind an der Unterseite des Stranges, d.h. an der Aussenseite des Bogens angeordnete Pyrometer durch Wassereintritt in das Visierrohr besonders gefährdet und es kommt oft schon nach kurzer Messdauer zu einem Ausfall des Pyrometers. Bei Verwendung von Lichtleitern kommt es zwar zu keiner Abkühlung der Messstelle, jedoch haben Lichtleiter nur eine geringe Temperaturbeständigkeit (bis zu etwa 240°C) und können nur in beschränkten Längen verwendet werden. Daher ist es erforderlich, das Pyrometer in diesem Fall innerhalb der Kühlkammer anzuordnen, was jedoch für die Funktionstüchtigkeit des Pyrometers ein nicht unerhebliches Risiko darstellt.

Mit der Verwendung eines Pyrometers ist weiters der Nachteil verbunden, dass die Oberflächentemperatur des Stranges nur an bestimmten Stellen der Strangführung gemessen werden kann. Es ist mit einem Pyrometer nicht möglich, den Verlauf der Temperatur der Oberfläche etwa vom Austritt des Stranges aus der Kokille bis zum Brennschneidrollgang kontinuierlich zu messen. Einer solchen kontinuierlichen Messung kommt grosse Bedeutung zu, da durch sie eine einwandfreie Einstellung der Kühlung des Stranges gemäss einem optimalen Temperaturverlauf der Strangoberfläche über die Länge der Anlage ermöglicht wird.

Weiters ist es aus der DE-A-2 657 068 bekannt, die Oberflächentemperatur des Stranges mittels eines auf die Strangoberfläche aufgebrachten Thermoelementes während des Ausziehens des Stranges aus der Kokille zu messen, wobei das Thermoelement, d.h. die Messstelle und das die Messstelle mit den Ausgleichsleitungen verbindende Thermopaar, quer zur Stranglängsrichtung auf die Strangoberfläche aufgebracht wird. Dies hat den Nachteil, dass sich die Anschlussstelle des Thermoelementes innerhalb der Kühlkammer befinden muss, wodurch es

zu einem Feuchtigkeitsschluss kommen kann. Ausserdem ist es bei dem bekannten Verfahren notwendig, die Anschlussstelle des Thermoelementes synchron mit dem Stranng mitzubewegen, was eine aufwendige Konstruktion erfordert und die Gefahr in sich birgt, dass die Konstruktion bei Strangdurchbrüchen beschädigt wird. Ausserdem sind die Platzverhältnisse seitlich des Stranges sehr beschränkt.

Die Erfindung bezweckt die Vermeidung dieser Nachteile und Schwierigkeiten der bekannten Messverfahren und stellt sich die Aufgabe, ein kontinuierlich über die Länge des Stranges bzw. über die Länge der Strangführung funktionierendes Messverfahren sowie eine Einrichtung zur Durchführung des Verfahrens zu schaffen, welche nicht nur unempfindlich sind gegenüber den innerhalb der Kühlkammer herrschenden Bedingungen, sondern welche es auch ermöglichen, den Platz seitlich neben dem Strang freizuhalten und wobei die Einrichtung zur Durchführung des Verfahrens konstruktiv einfach gestaltet werden kann.

Diese Aufgabe wird erfindungsgemäss dadurch gelöst, dass das Thermoelement kontinuierlich der Strangoberfläche zugeführt und in Stranglängsrichtung über eine vorgegebene Länge des Gussstranges in die Strangoberfläche eingewalzt wird.

Zweckmässig werden mehrere Messstellen hintereinander in die Strangoberfläche eingewalzt, wobei die Thermopaare jeder Messstelle in Längsrichtung des Stranges nebeneinander zu liegen kommen.

Eine Einrichtung zur Durchführung des Messverfahrens in einer Stranggiessanlage, die mit Strangführungsrollen aufweisenden, an eine Durchlaufkokille anschliessenden Strangführungsbahnen ausgestattet ist, welche Einrichtung eine stationäre Zubringvorrichtung für ein Thermoelement aufweist, in der eine Anschlussstelle zur Verbindung des Thermoelementes mit Ausgleichsleitungen vorgesehen ist, ist dadurch gekennzeichnet, dass die Zubringvorrichtung eine das Thermoelement abspulende Trommel sowie Einrichtungen zur Einführung des Thermoelementes in Stranglängsrichtung zwischen die Strangoberfläche und eine Strangführungsrolle aufweist.

Zweckmässig weist die Zubringvorrichtung eine von der Trommel zwischen zwei Strangführungsrollen gerichtete rohrförmige Führungsbahn auf.

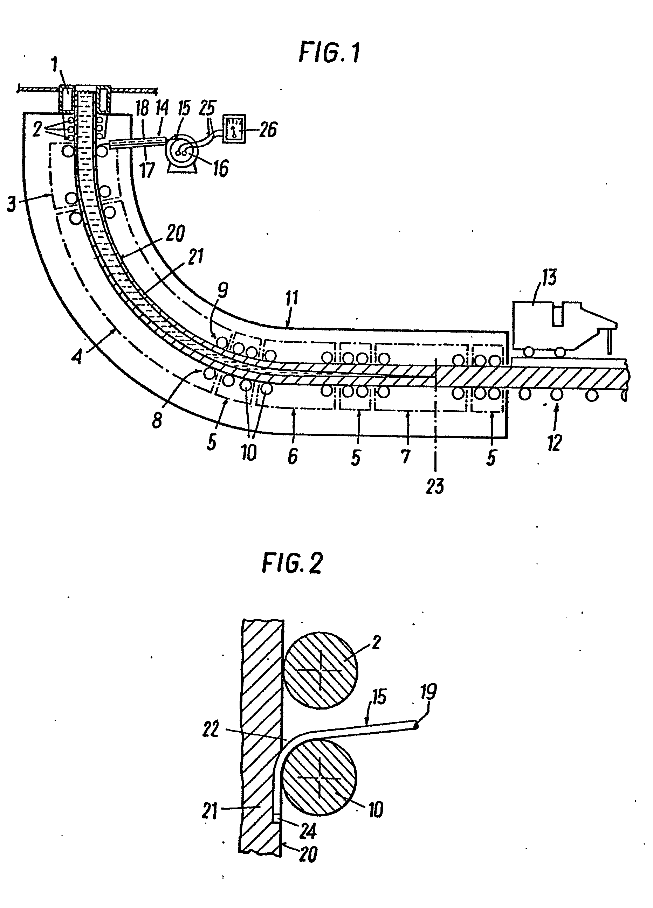

Die Erfindung ist nachfolgend anhand der Zeichnung an einem Ausführungsbeispiel näher erläutert, wobei Fig. 1 einen schamtisch dargestellten Längsschnitt durch eine Stranggiessanlage und Fig. 2 ein Detail dieses Schnittes zeigen.

Unterhalb der Kokille 1 befinden sich die an ihr befestigten Stützrollen 2 (Fussrollen). An diese Stützrollen 2 anschliessend ist eine Biegezone 3 vorgesehen, an die ein kreisbogenförmiges, einteiliges Stütz- und Führungsgerüst 4 anschliesst. In weiterer Folge ist ein Treibrollengerüst 5 und sodann ein Richtaggregat 6 mit einem nachfolgend weiteren Treibrollengerüst 5 und einer daran anschliessenden horizontalen Strangführung 7 vorgesehen. Sowohl das Stütz- und Führungsgerüst 4 als auch die Treibrollengerüste 5, das Richtaggregat 6 und die horizontale Strangführung 7 weisen einander gegenüberliegende Strangführungsbahnen 8, 9 auf, die mit Strangführungsrollen 10 versehen sind. Zur Kühlung des Stranges und der mit dem Strang in Berührung kommenden Maschinenteile sind nicht dargestellte Kühldüsen vorgesehen, durch die Kühlmittel über diese Maschinenteile bzw. auf die Strangoberfläche gespritzt wird. Um den Dampf und das Spritzwasser nicht in die Giesshalle gelangen zu lassen, ist die gesamte Strangführung von einer Kühlkammer 11 umgeben. Anschliessend an die Kühlkammer ist ein Brennschneidrollgang 12 vorgesehen, an dem der Strang in Brammen vorgegebener Länge mittels des Brennschneiders 13 abgelängt wird.

Unterhalb der Kokille ist eine stationäre Zubringvorrichtung 14 für ein Thermoelement 15 vorgesehen, welche Zubringvorrichtung eine mit einem Antrieb versehene Trommel 16 aufweist, von der eine zwischen zwei Strangführungsrollen, und zwar zwischen der letzten an der Kokille montierten Fussrolle 2 und der ersten Strangführungsrolle 10 der Biegezone 3 gerichtete Führungsbahn 17 ausgeht. Diese Führungsbahn ist an der Oberseite mit einem Rohr 18 versehen.

Das zunächst vor der Temperaturmessung auf der Trommel 16 aufgewickelte Thermoelement 15 (welches vorzugsweise ein Thermopaar 19, bestehend aus Ni/Cr-Ni, aufweist) wird durch Antreiben der Trommel 16 in das Rohr 18 gefädelt, durch das Rohr 18 in Richtung zur Strangoberfläche 20 des Stranges 21 hindurchgeschoben und gelangt in den von der Strangführungsrolle 10 und der Strangoberfläche 20 gebildeten Spalt 22. Anschliessend wird das Thermoelement mittels der Strangführungsrolle 10 in die Strangoberfläche 20 eingewalzt. Das Thermoelement 15 entspricht in seiner Länge etwa der metallurgischen Länge des Stranges, d.g. der Länge des Stranges von der Kokille 1 bis zum ersten durcherstarrten Querschnitt (bei 23) des Stranges 21 plus der Länge der Führungsbahn 17. Die Messstelle 24 des Thermoelementes 15 befindet sich am vorderen Ende des Thermopaares 19; am hinteren Ende sind über eine automatische Kupplungseinheit die Ausgleichsleitungen 25 angeschlossen, die zu einem Registriergerät 26 führen, von dem die gemessene Temperatur angezeigt, geschrieben oder einem Rechner zur gezielten Steuerung der Kühlwassermengen eingegeben wird. Durch das in den Strang eingewalzte Thermoelement 15 kann die Temperatur an der Strangoberfläche 20 über die gesamte metallurgische Länge (gegebenenfalls bis zur Brennschneidmaschine 13) sowohl an der bogeninnen- als auch an der bogenaussenseitigen Oberfläche 20 erfasst werden. Dadurch ist es möglich, eine Wiedererwärmung der Strangoberfläche 20 genau zu erfassen und die Kühlwassermengen auf die metallurgische Länge sowie die Aufteilung der Kühlwassermenge auf die bogeninnen- und bogenaussenseitige Oberfläche 20 des Stranges 21 genau einzuregeln. Im Zusammenhang mit einem Prozessrechner kann mit diesem Temperaturmessverfahren eine optimale Steuerung der Sekundärkühlzone innerhalb der Kühlkammer 11 erfolgen.

Der Messvorgang wird zweckmässigerweise zu Beginn des Giessens durchgeführt und die Kühlung danach eingerichtet. Es ist aber auch möglich, mehrere Thermoelemente 15 dem Strang 21 gleichzeitig zuzuführen, wobei sich deren Messstellen 24 etwa im Abstand von einigen Metern voneinander (in Längsrichtung des Stranges 21 hintereinander) in der Strangoberfläche befinden. Die Thermopaare 19 der gleichzeitig in die Strangoberfläche eingewalzten Thermoelemente liegen sodann parallel zueinander.

Da das Thermoelement nur sehr dünne Drähte aufweist, wirkt es sich auf die Oberflächenqualität des Stranges nur geringfügig aus. Werden die Brammen maschinengeflämmt, so ist das Thermoelement aus der Strangoberfläche restlos entfernt, andernfalls (bei Handflämmen) muss es gegebenenfalls separat ausgeflämmt werden.

**Patentansprüche**

1. Verfahren zum kontinuierlichen Messen der Strangoberflächentemperatur über die Länge eines kontinuierlich vergossenen Gussstranges (21), insbesondere eines Stahlbrammengussstranges, innerhalb einer Rollenführung einer Stranggiessanlage, wobei mindestens ein Thermoelement (15) mit seiner Messstelle (24) und mit seinem die Messstelle mit den Ausgleichsleitungen (25) verbindenden Thermopaar (19) auf die Strangoberfläche (20) aufgebracht und mit der Strangoberfläche mitbewegt wird, dadurch gekennzeichnet, dass das Thermoelement (15) kontinuierlich der Strangoberfläche (20) zugeführt und in Stranglängsrichtung über eine vorgegebene Länge des Gussstranges (21) in die Strangoberfläche (20) eingewalzt wird.

2. Verfahren nach Anspruch 1, dadurch gekennzeichnet, dass mehrere Messstellen (24) hintereinander in die Strangoberfläche (20) eingewalzt werden, wobei die Thermopaare (19) jeder Messstelle (24) in Längsrichtung des Stranges (21) nebeneinander zu liegen kommen.

3. Einrichtung zur Durchführung des Verfahrens nach Anspruch 1 oder 2 in einer Stranggiessanlage, die mit Strangführungsrollen (10) aufweisenden, an eine Durchlaufkokille (1) anschliessenden Strangführungsbahnen (8, 9) ausgestattet ist, welche Einrichtung eine stationäre Zubringvorrichtung (14) für ein Thermoelement (15) aufweist, in der eine Anschlussstelle zur Verbindung des Thermoelementes (15) mit Ausgleichsleitungen vorgesehen ist, dadurch gekennzeichnet, dass die Zubringvorrichtung (14) eine das Thermoelement (15) abspulende Trommel (16) sowie Einrichtungen zur Einführung des Thermoelementes (15) in Stranglängsrichtung zwischen die Strangoberfläche (20) und eine Strangführungsrolle (10) aufweist.

4. Einrichtung nach Anspruch 3, dadurch gekennzeichnet, dass die Zubringvorrichtung (14) eine von der Trommel (16) zwischen zwei Strangführungsrollen (2, 10) gerichtete rohrförmige Führungsbahn (17) aufweist.

**Claims**

1. A method for continuously measuring the strand surface temperature over the length of a continuously cast strand (21), in particular a steel slab cast strand, within a roller fuide of a continuous casting plant, at least one thermoelement (15), with its measuring junction (24) and with its thermocouple (19) connecting the measuring junction with the equalizing conduits (25), being applied onto the strand surface (20) and moved together with the strand surface, characterized in that the thermoelement (15) is continuously supplied to the strand surface (20) and rolled into the strand surface (20) in the longitudinal direction of the strand over a predetermined length of the cast strand (21).

2. A method according to claim 1, characterized in that several measuring junctions (24) are subsequently rolled into the strand surface (20), the thermocouples (19) of each measuring junction (24) coming to lie one beside the other in the longitudinal direction of the strand (21).

3. An arrangement for carrying out the method according to claim 1 or 2 in a continuous casting plant equipped with strand guideways (8, 9) comprising strand guiding rollers (10) and following upon an open-ended mould (1), which arrangement comprises a stationary supply means (14) for a thermoelement (15), in which a connection-point is provided to connect the thermoelement (15) with equalizing conduits, characterized in that the supply means (14) comprises a drum (16) unwinding the thermoelement (15) as well as means to introduce the thermoelement (15) in the longitudinal direction of the strand between the strand surface (20) and a strand guiding roller (10).

4. An arrangement according to claim 3, characterized in that the supply means (14) comprises a tubular guideway (17) drected from the drum (16) to between two strand guiding rollers (2, 10).

**Revendications**

1. Procédé pour la mesure continue de la température superficielle suivant la longueur d'une barre coulée contonûment (21), et en particulier d'une barre à brames d'acier dans un train de rouleaux d'une installation de coulée continue, un thermocouple (15) au moins avec son point de mesure (24) et son couple thermoélectrique (19) reliant le point de mesure aux lignes de compensation (25), étant déposé sur la surface (20) de la barre et déplacé avec cette dernière, ledit procédé étant caractérisé en ce que le thermocouple (15) est amené continûment vers la surface (20) de la barre et fixé par laminage dans cette dernière, suivant le grand axe et sur une longueur prédéterminée de la barre (21).

2. Procédé selon revendication 1, caractérisé en ce que plusieurs points de mesure (24) sont fixés successivement par laminage dans la surface (20) de la barre, les couples thermoélectriques (19) de chaque point de mesure (24) se trouvant côte à côte suivant le grand axe de la barre (21).

3. Dispositif pour la mise en oeuvre du procédé selon une des revendications 1 ou 2 dans une installation de coulée continue, équipé de trains (8, 9) de rouleaux de guidage (10) faisant suite à une lingotière ouverte (1), avec un dispositif fixe (14) d'amenée d'un thermocouple (15), dans lequel est prévu un point de connexion pour relier le thermocouple (15) aux lignes de compensation, ledit dispositif étant caractérisé en ce que le dispositif d'amenée (14) comporte un tambour (16) déroulant le thermocouple (15), et des dispositifs d'introduction du thermocouple (15) suivant le grand axe de la barre, entre la surface (20) de cette dernière et un reouleau de guidage (10).

4. Dispositif selon revendication 3, caractérisé en ce que le dispositif d'amenée (14) comporte une glissière tubulaire (17) dirigée du tambour (16) vers l'intervalle compris entre deux rouleaux de guidage (2, 10) de la barre.

## FIG.1

## FIG.2